# EUROPEAN PATENT SPECIFICATION

(11) **EP 2 782 201 B1**
(45) Date of publication and mention of the grant of the patent: **02.11.2016**
(21) Application number: 12849742.7
(22) Date of filing: 07.09.2012
(51) Int. Cl.: H02H 7/18, G01R 31/36, H01M 10/00, H02H 1/06, H02H 1/00

(54) **STORAGE BATTERY UNIT**
AKKUMULATOREINHEIT
UNITÉ DE BATTERIE RECHARGEABLE

(30) Priority: 16.11.2011 JP 2011250780
(43) Date of publication of application: 24.09.2014
(73) Proprietor: Panasonic Intellectual Property Management Co., Ltd., Osaka 540-6207 (JP)
(72) Inventor: TAMURA, Hideki, Osaka-shi, Osaka 540-6207 (JP)
(74) Representative: Appelt, Christian W.
(86) International application number: PCT/JP2012/072841
(87) International publication number: WO 2013/073269

(56) References cited:
- JP-A- 2010 200 485
- JP-A- 2011 009 042
- JP-A- 2011 080 811
- US-A1- 2006 255 768
- US-A1- 2007 273 329
- US-B1- 7 183 748

## Description

### TECHNICAL FIELD

The present invention relates to a storage battery unit having a storage battery that stores electric power from a power supply.

### BACKGROUND ART

There has been known a storage battery unit that has a storage battery configured to store electric power from a power supply (such as commercial power supply and distributed power supply) and that operates in a power supply system for supplying electricity to a load device (for example, see JP2011-80811A).

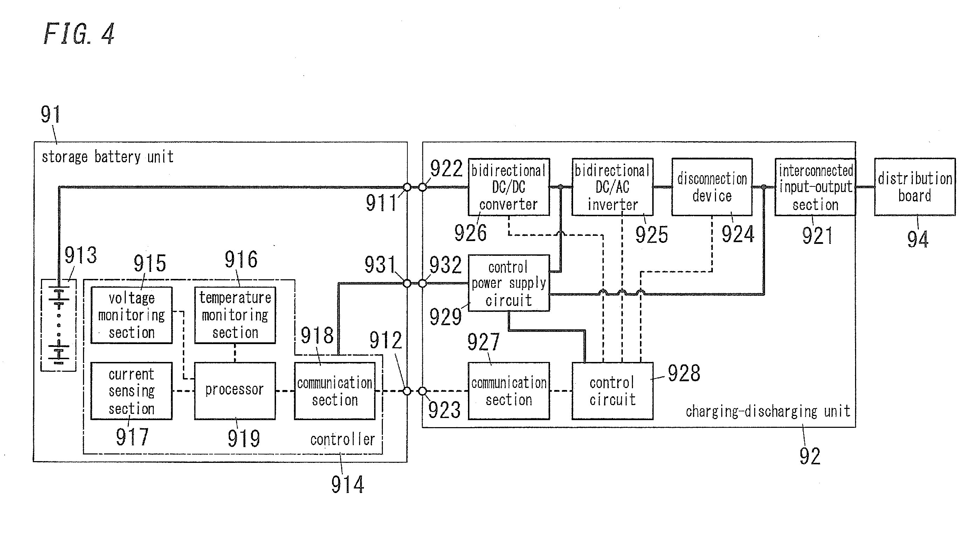

Referring to FIG. 4, the conventional storage battery unit 91 includes a charging-discharging terminal 911, a communication terminal 912, a storage battery 913, and a controller 914 configured to monitor the storage battery 913. Charging and discharging of the storage battery unit 91 is controlled by an external device (a charging-discharging unit 92, in the example shown in FIG. 4). In FIG. 4, solid lines indicate power lines, and broken lines indicate signal and control lines.

The conventional controller 914 includes a voltage monitoring section 915 configured to monitor a battery voltage (a total voltage) of the storage battery 913, a temperature monitoring section 916 configured to monitor a battery temperature of the storage battery 913, and a current sensing section 917 configured to sense a charging current and a discharging current of the storage battery 913. The controller 914 further includes a communication section 918 configured to communicate with the charging-discharging unit 92, and a processor 919 configured to execute various processes.

The processor 919 is configured to acquire: a monitoring result of the battery voltage of the storage battery 913 from the voltage monitoring section 915; a monitoring result of the battery temperature of the storage battery 913 from the temperature monitoring section 916; and a sensing result of the charging-discharging current of the storage battery 913 from the current sensing section 917. Acquiring such information, the processor 919 detects occurrence of a malfunction regarding charging and discharging of the storage battery 913, using the monitoring result of the battery voltage, the monitoring result of the battery temperature, and the sensing result of the charging-discharging current.

The conventional charging-discharging unit 92 includes a interconnected input-output section 921, a charging-discharging terminal 922, a communication terminal 923, a disconnection device 924, a bidirectional DC/AC inverter 925, and a bidirectional DC/DC converter 926. The charging-discharging unit 92 further includes a communication section 927 configured to communicate with the storage battery unit 91, and a control circuit 928 configured to control the disconnection device 924, the bidirectional DC/AC inverter 925, the bidirectional DC/DC converter 926 and the communication section 927. The charging-discharging unit 92 further includes a control power supply circuit 929 configured to supply the control circuit 928 with operating power (drive power) for operating the control circuit 928. The interconnected input-output section 921 is connected to a distribution board 94.

In the conventional storage battery unit 91, the operating power for operating the controller 914 is generally provided from an external device such as the charging-discharging unit 92. In the example shown in FIG. 4, the control power supply circuit 929 in the conventional charging-discharging unit 92 supplies the storage battery unit 91 with the operating power for the controller 914. For this purpose, the conventional storage battery unit 91 has a power terminal 931 for receiving the operating power, and the conventional charging-discharging unit 92 has a power terminal 932 for supplying the operating power to the storage battery unit 91.

There is however a possibility that the conventional storage battery unit 91 shown in FIG. 4 cannot be supplied the operating power for the controller 914 depending on an external device to which the storage battery unit 91 is connected. For example, when the conventional storage battery unit 91 is connected to an external device that does not have a function of supplying operating power outside, the conventional storage battery unit 91 cannot receive the operating power for the controller 914. Hence, in the conventional storage battery unit 91, the storage battery 913 is charged and discharged under a condition where the controller 914 does not operate, i.e., under a condition where the storage battery 913 is not monitored by the controller 914. As a result, the storage battery 913 may be over-charged or over-discharged.

Besides, because the storage battery unit 91 is a separate device from the charging-discharging unit 92, the storage battery unit 91 may be detached from the charging-discharging unit 92 and be directly connected to a DC power supply or a load device. Such the case may have a concern that the storage battery 913 is over-charged or over-discharged because the storage battery 913 of the storage battery unit 91 is not monitored.

In addition, in case where the operating power for the controller 914 is not supplied due to a failure of the charging-discharging unit 92, the storage battery 913 may be over-charged or over-discharged because the storage battery 913 of the storage battery unit 91 is not monitored.

Document US 2006/0255768 A1 discloses a battery protecting circuit. When the voltage of battery has not reached the voltage needed for generating the driving voltage of NMOS transistors in drives, the boosting operation of drives is stopped, and PMOS transistor inserted in a power feeding path different from that of said transistors is turned ON by a driver.

Document US 7,183,748 B1 discloses a charging control unit deciding the number of battery cells on the basis of an output voltage of a battery pack, and an output voltage of a charging circuit is determined in accordance with the decided number of battery cells.

Document US 2007/0273329 A1 discloses a storage battery unit including a storage battery and a monitoring device that monitors a state of the storage battery using an output of the storage battery as an input, wherein a starting circuit is provided between the storage battery and the monitoring device.

### SUMMARY OF INVENTION

The present invention has been achieved in view of the above circumstances, and an object thereof is to provide a storage battery unit that can charge and discharge a storage battery while monitoring the state of the storage battery even if any external device is connected thereto.

The storage battery according to the appended independent claim integrally includes: a storage battery; a controller that has a monitoring function configured to monitor the storage battery; a control power supply configured to supply the controller with operating power for operating the controller; a charging-discharging terminal for charging and discharging of the storage battery; and a switch provided in a charging-discharging line between the charging-discharging terminal and the storage battery. The control power supply is connected to the charging-discharging line between the charging-discharging terminal and the switch, and is configured to receive electric power through the charging-discharging line to supply the controller with the operating power. The controller is configured, as the monitoring function, to judge whether or not a malfunction is present at the storage battery, and also to control, when a malfunction occurs in the storage battery, a notification means so that the notification means gives a notification of the malfunction of the storage battery. The switch is configured to be opened when the storage battery is not charged or discharged.

In this storage battery unit, it is preferable that the controller is configured to control the switch so that the switch is opened when a malfunction occurs during charging or discharging of the storage battery.

According to the invention, it is possible to charge and discharge a storage battery while monitoring the state of the storage battery even if any external device is connected thereto.

### BRIEF DESCRIPTION OF DRAWINGS

FIG. 1 is a block diagram of a storage battery unit and a charging-discharging unit according to an embodiment;
FIG. 2 is a block diagram of a power supply system according to the embodiment;
FIG. 3 is a block diagram of another connection example of the storage battery unit according to the embodiment; and
FIG. 4 is a block diagram of conventional storage battery and charging-discharging units.

### DESCRIPTION OF EMBODIMENTS

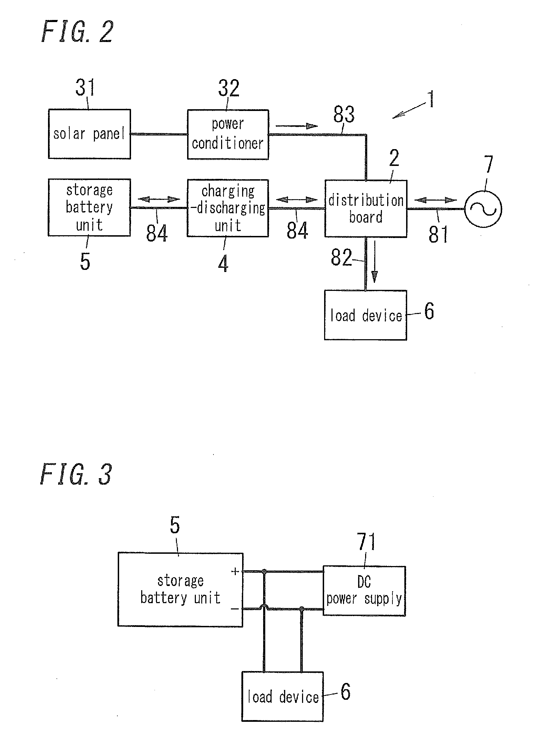

A power supply system 1 according to the present embodiment will be described with reference to FIG. 2. The power supply system 1 of the embodiment operates in a consumer facility to which electric power is supplied from an electric power company, for example. Examples of the consumer facility include a detached house, each dwelling unit in a condominium, an industrial plant, and an office.

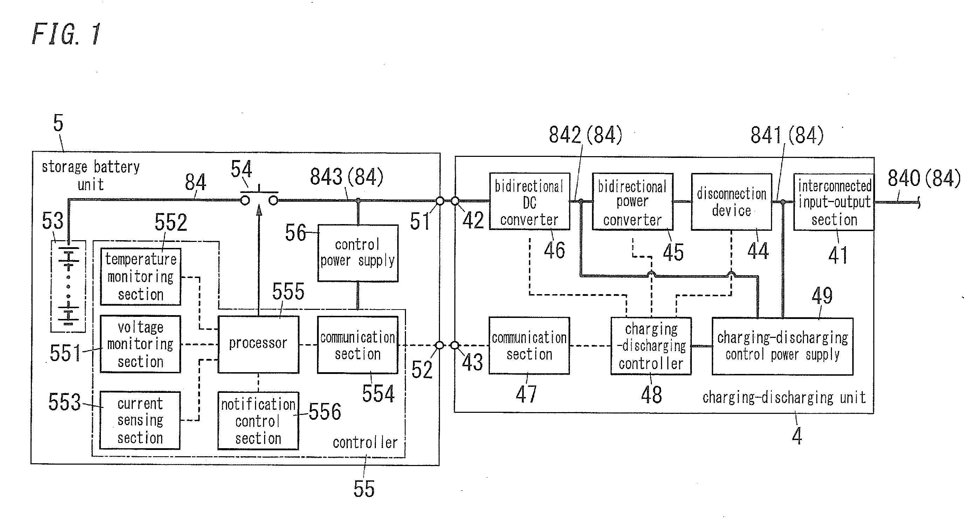

The power supply system 1 of the embodiment is a system formed of a combination of a solar power generation apparatus (a solar panel 31 and a power conditioner 32) and an electric storage apparatus (a charging-discharging unit 4 and a storage battery unit 5). As a usage example, electric power generated by solar power generation is supplied to a load device 6 in day time, and surplus power thereof is stored in a storage battery 53 (see FIG. 1) of the storage battery unit 5 or allowed to be flow back to a commercial power system. In a period when the solar power generation does not operate well such as in night time, the storage battery 53 is discharged to supply electric power to the load device 6. The power supply system 1 can be used in a situation other than the above described usage example.

The power supply system 1 of the embodiment includes a distribution board 2, the solar panel 31, the power conditioner 32, the charging-discharging unit 4 and the storage battery unit 5. Load devices 6 are connected to the distribution board 2. Examples of the load device 6 include an illumination device, an air-conditioner and a home electrical device.

As shown in FIG. 1, the storage battery unit 5 in the power supply system 1 of the embodiment integrally includes a control power supply 56 configured to supply a controller 55 with operating power (driving power) for operating the controller 55, together with the storage battery 53, and the controller 55. In FIG. 1, solid lines indicate power lines, and broken lines indicate signal and control lines.

The distribution board 2 shown in FIG. 2 includes a main breaker (not shown), branch breakers (not shown), and a breaker for solar power generation (not shown). The distribution board 2 is connected to a trunk power line 81 which is in conformity with a single-phase three-wire system, of which rate voltage is 100V or 200V and which is introduced into a consumer facility. The distribution board 2 is configured to be supplied with electric power from a commercial power supply 7 of an electric power company through the trunk power line 81. The distribution board 2 is also configured to be supplied, through the power conditioner 32, with electric power generated by the solar panel 31. The trunk power line 81 is connected to the branch breakers through the main breaker, thereby branching into branch lines 82 by the respective branch breakers. The branch lines 82 are connected to the load devices 6, and each load device 6 is supplied with AC power through a corresponding branch line 82.

The solar panel 31 includes solar cells which are arranged side-by-side and connected with each other, and is installed on a roof of a residence, for example. The solar panel 31 is configured to generate DC power by the solar power generated by energy of sunlight. The DC power generated by the solar panel 31 is supplied to the power conditioner 32.

The power conditioner 32 is configured to convert a DC voltage, which is the output voltage of the solar panel 31, into an AC voltage. The power conditioner 32 is connected to a primary side of the main breaker through the breaker for solar power generation in the distribution board 2 by means of an AC line 83. With this configuration, AC power is supplied from the power conditioner 32 to the branch lines 82 through the breaker for solar power generation, the main breaker, and the branch breakers. Surplus (i.e., not consumed) power of the AC power from the power conditioner 32 is supplied to the charging-discharging unit 4 through a charging-discharging line 84(840).

The charging-discharging unit 4 will be described with reference to FIG. 1. The charging-discharging unit 4 is connected to a branch breaker (not shown) of the distribution board 2 through the charging-discharging line 840. The charging-discharging unit 4 is configured to convert AC power supplied through the distribution board 2 into DC power, and to charge the storage battery 53 of the storage battery unit 5 by the DC power. The charging-discharging unit 4 is also configured to convert DC power stored in the storage battery unit 5 into AC power, and to supply the AC power to the load devices 6 through the distribution board 2. That is, the charging-discharging unit 4 has both functions of AC to DC conversion and DC to AC conversion.

The charging-discharging unit 4 includes an interconnected input-output section 41, a charging-discharging terminal (a charging-discharging unit side charging-discharging terminal) 42, a communication terminal (a charging-discharging unit side communication terminal) 43, a disconnection device 44, a bidirectional power converter 45, and a bidirectional DC converter 46. The charging-discharging unit 4 further includes a communication section (a charging-discharging control side communication section) 47, a charging-discharging controller 48, and a charging-discharging control power supply 49. The interconnected input-output section 41 is connected to the charging-discharging line 840 which is connected to the distribution board 2.

The charging-discharging terminal 42 is a terminal provided for connecting a charging-discharging line 84 of the charging-discharging unit 4 side with a charging-discharging line 84 of the storage battery unit 5 side, and is electrically connected to a charging-discharging terminal 51 of the storage battery unit 5.

The communication terminal 43 is a terminal provided for wire communication between the charging-discharging unit 4 and the storage battery unit 5, and is electrically connected to a communication terminal 52 of the storage battery unit 5.

The disconnection device 44 (e.g., a relay) is disposed along a charging-discharging line 84 between the interconnected input-output section 41 and the bidirectional power converter 45, and is configured to be opened and closed in accordance with control of the charging-discharging controller 48. That is, the disconnection device 44 is to be closed so as to make an electrical connection between the interconnected input-output section 41 and the bidirectional power converter 45, or is to be opened so as to break the electrical connection between the interconnected input-output section 41 and the bidirectional power converter 45.

The bidirectional power converter 45 is a bidirectional DC/AC converter configured to perform conversion between DC power and AC power in accordance with control of the charging-discharging controller 48. In a case of charging the storage battery unit 5 of the storage battery 53, the bidirectional power converter 45 converts AC power, which is supplied through the interconnected input-output section 41 and the disconnection device 44 in the charging-discharging line 84, into DC power, and supplies the bidirectional DC converter 46 with the DC power. In a case of discharging the storage battery 53, the bidirectional power converter 45 converts DC power supplied from the bidirectional DC converter 46 into AC power. The charging-discharging controller 48 controls operation of the bidirectional power converter 45 and the opening-closing state of the disconnection device 44, thereby supplying the AC power outputted from the bidirectional power converter 45 to the distribution board 2 through the interconnected input-output section 41. The charging-discharging unit 4 has a system interconnected-operating function configured to coordinate the AC power, which is supplied to the distribution board 2 from the interconnected input-output section 41, with the commercial power supplied from the commercial power supply 7.

The bidirectional DC converter 46 is a bidirectional DC/DC converter configured to perform DC conversion in accordance with control of the charging-discharging controller 48. In the case of charging the storage battery 53 of the storage battery unit 5, the bidirectional DC converter 46 converts the DC power outputted from the bidirectional power converter 45 and supplies the converted DC power to the charging-discharging terminal 42 (i.e., to the storage battery unit 5). In the case of discharging the storage battery 53, the bidirectional DC converter 46 converts the DC power of the storage battery unit 5 (supplied through the charging-discharging terminal 42) and supplies the converted DC power to the bidirectional power converter 45.

The communication section 47 has a communication function configured to communicate with the storage battery unit 5 in accordance with control of the charging-discharging controller 48. The communication section 47 having the communication function is configured to transmit and receive information to and from the storage battery unit 5, e.g., receives battery information about the storage battery unit 5 from the storage battery unit 5, and transmits, to the storage battery unit 5, malfunction information that indicates occurrence of a malfunction in the charging-discharging unit 4.

The charging-discharging controller 48 is mainly composed of a micro computer and the like, and has a function configured to control the disconnection device 44, the bidirectional power converter 45, the bidirectional DC converter 46 and the communication section 47. The charging-discharging controller 48 is configured to control the disconnection device 44, the bidirectional power converter 45, the bidirectional DC converter 46 and the communication section 47 based on the battery information received through the communication section 47, thereby controlling charging and discharging of the storage battery 53. Specific example is described below.

Under charging operation, when the communication section 47 receives, from the storage battery unit 5, battery information indicating that the battery voltage (a total voltage) of the storage battery 53 reaches (or excesses) a predetermined charge-stop voltage, the charging-discharging controller 48 controls the bidirectional power converter 45 and the bidirectional DC converter 46 to stop charging of the storage battery 53. The same applies to a case where the communication section 47 receives, from the storage battery unit 5, battery information indicating that each cell voltage of the storage battery 53 reaches (or excesses) a predetermined charge-stop voltage, battery information indicating that the battery temperature of the storage battery 53 is a predetermined operating upper limit temperature or more, or battery information indicating that the battery temperature of the storage battery 53 is a predetermined operating lower limit temperature or less.

Under discharging operation, when the communication section 47 receives, from the storage battery unit 5, battery information indicating that the battery voltage of the storage battery 53 reaches (or is less than) a predetermined discharge-stop voltage, the charging-discharging controller 48 controls the bidirectional power converter 45 and the bidirectional DC converter 46 to stop discharging of the storage battery 53. The same applies to a case where the communication section 47 receives, from the storage battery unit 5, battery information indicating that each cell voltage of the storage battery 53 reaches a predetermined discharge-stop voltage (e.g., a cell voltage of at least one battery cell in a plurality of battery cells in the storage battery 53 is equal to or less than a discharge-stop voltage), battery information indicating that the battery temperature of the storage battery 53 is the predetermined operating upper limit temperature or more, or battery information indicating that the battery temperature of the storage battery 53 is the predetermined operating lower limit temperature or less.

The charging-discharging control power supply 49 is a power supply circuit configured to supply the charging-discharging controller 48 with the operating power for operating the charging-discharging controller 48. The charging-discharging control power supply 49 is connected to the charging-discharging line 84(841) between the interconnected input-output section 41 and the disconnection device 44, and is also connected to the charging-discharging line 84(842) between the bidirectional power converter 45 and the bidirectional DC converter 46. The charging-discharging control power supply 49 is configured to receive electric power through the charging-discharging line 841, 842, and to supply the charging-discharging controller 48 with operating power.

The storage battery unit 5 will be described with reference to FIG. 1. The storage battery unit 5 is connected to the charging-discharging unit 4. The storage battery unit 5 is configured to charge the storage battery 53 by the DC power supplied from the charging-discharging unit 4, and also to discharge the storage battery 53 to supply the DC power to the charging-discharging unit 4. Charging and discharging of the storage battery unit 5 is controlled by the charging-discharging unit 4 which is provided separately from the storage battery unit 5.

The storage battery unit 5 integrally includes the charging-discharging terminal (a storage battery unit side charging-discharging terminal) 51, the communication terminal (a storage battery unit side communication terminal) 52, the storage battery 53, a switch 54, the controller 55, the control power supply 56 and a notification control section 556. For example, the charging-discharging terminal 51, the communication terminal 52, the storage battery 53, the switch 54, the controller 55 and the control power supply 56 are housed in a single housing, so that the storage battery unit 5 of the embodiment integrally includes these components.

The charging-discharging terminal 51 is a terminal provided for charging and discharging of the storage battery 53, i.e., for connecting the storage battery 53 with an external charging-discharging line 84, and is electrically connected to the charging-discharging terminal 42 of the charging-discharging unit 4 in the embodiment.

The communication terminal 52 is a terminal provided for wire communication between the storage battery unit 5 and an external device (or an external unit), and is electrically connected to the communication terminal 43 of the charging-discharging unit 4 in the embodiment.

The storage battery 53 includes, for example, a series-connected battery cells such as lithium ion cells or nickel hydride cells.

The switch 54 is disposed along a charging-discharging line 84 between the charging-discharging terminal 51 and the storage battery 53. The switch 54 is to be closed so as to make an electrical connection between the charging-discharging terminal 51 and the storage battery 53, or is to be opened so as to break the electrical connection between the charging-discharging terminal 51 and the storage battery 53. The switch 54 of the embodiment has a manual open-close mechanism, and also has a mechanism configured to be opened and closed by the controller 55 (i.e., an automatic open-close mechanism). The switch 54 is opened when a malfunction occurs during charging or discharging of the storage battery 53, and also when the storage battery 53 is not charged or discharged (i.e., when it is not used). The switch 54 may be a normally-opened type switch, and closed only when the switch 54 is controlled to be closed by the controller 55.

The controller 55 has a function configured to monitor the storage battery 53 in order to protect the storage battery 53. In a case where the storage battery 53 is composed of the lithium ion cells, in particular, because an abnormal region is close to a normal region, it needs to monitor the battery voltage of the storage battery 53, the cell voltages of the battery cells, and the battery temperature of the storage battery 53 when controlling the charging and discharging of the storage battery 53.

The controller 55 of the embodiment includes a voltage monitoring section 551, a temperature monitoring section 552, a current sensing section 553, a communication section (a storage battery unit side communication section) 554, a processor 555, and the notification control section 556.

The voltage monitoring section 551 is a circuit configured to monitor (sense) the battery voltage of the storage battery 53 and the cell voltages of the battery cells. The battery voltage and the cell voltages may be changed according to internal short-circuit, increase in self-discharge, impurity incorporation, abnormal increase in internal resistance, and the like. Of course the battery voltage and cell voltages can have some dispersion, but such a storage battery 53 that at least one of the battery voltage and the cell voltages thereof is out of a predetermined protection range is determined to have some malfunction.

The temperature monitoring section 552 is a circuit that includes a temperature sensor such as a thermistor, and that is configured to monitor the battery temperature of the storage battery 53. In the storage battery unit 5, the storage battery 53 may not be able to be discharged in a case where the storage battery 53 is charged or discharged in a low temperature condition. It therefore needs to stop charging and discharging of the storage battery 53 and to warm the storage battery 53 if the battery temperature is a predetermined operating lower limit temperature or less. Besides, the storage battery 53 has a property of being deteriorated with increase in temperature. It therefore needs to cool the storage battery 53 so that the battery temperature is kept under a predetermined operating upper limit temperature. The storage battery unit 5 includes the temperature monitoring section 552 configured to monitor the battery temperature for these reasons.

The current sensing section 553 is a circuit configured to sense: a charging current which flows in the storage battery 53 when the storage battery 53 is charged; and a discharging current which flows from the storage battery 53 when the storage battery 53 is discharged. In the embodiment, the charging current or the discharging current is referred to as "charging-discharging current". When a large current (excess current) flows during charging or discharging of the storage battery 53, deterioration of the storage battery 53 is accelerated due to that the storage battery 53 is overloaded. The storage battery unit 5 includes the current sensing section 553 configured to sense the charging-discharging current for this reason.

The communication section 554 has a communication function configured to communicate with the charging-discharging unit 4 in accordance with control of the processor 555. The communication section 554 having the communication function is configured to transmit and receive information to and from the charging-discharging unit 4, e.g., transmits the battery information about the storage battery unit 5 to charging-discharging unit 4, and receives the malfunction information that indicates occurrence of a malfunction in the charging-discharging unit 4 from the charging-discharging unit 4. Examples of the battery information about the storage battery unit 5 include: a monitoring result of the battery voltage of the storage battery 53 and the cell voltages of the battery cells; a monitoring result of the temperature of the storage battery 53; a sensing result of the charging-discharging current of the storage battery 53; and malfunction information that indicates occurrence of a malfunction in the storage battery unit 5. Examples of the monitoring result of the battery voltage of the storage battery 53 and the cell voltages of the battery cells include: voltage values of the battery voltage and the cell voltages; and determination information indicating that at least one of the battery voltage and the cell voltages reaches a predetermined charge-stop voltage or a predetermined discharge-stop voltage. Examples of the monitoring result of the temperature of the storage battery 53 include: a measured value of the battery temperature; and determination information indicating that the battery temperature is the predetermined operating upper limit temperature or more, or the predetermined operating lower limit temperature or less.

The processor 555 is mainly composed of a micro computer and the like, and is configured to acquire the monitoring result of the battery voltage and the cell voltages of the storage battery 53 from the voltage monitoring section 551. Further, the processor 555 is configured to acquire the monitoring result of the battery temperature of the storage battery 53 from the temperature monitoring section 552, and to acquire the sensing result of the charging-discharging current of the storage battery 53 from the current sensing section 553.

Under charging operation of the storage battery 53, the processor 555 judges whether at least one of the battery voltage and the cell voltages reaches a corresponding charge-stop voltage or not, based on the monitoring result of the battery voltage and the cell voltages. The processor 555 also judges whether or not the battery temperature is the predetermined operating upper limit temperature or more, or the predetermined operating lower limit temperature or less.

Under discharging operation of the storage battery 53, the processor 555 judges whether at least one of the battery voltage and the cell voltages reaches a corresponding discharge-stop voltage or not. The processor 555 also judges whether or not the battery temperature is the predetermined operating upper limit temperature or more, or the predetermined operating lower limit temperature or less.

In each of the charging and discharging operations, the processor 555 judges whether or not a malfunction of the storage battery 53 (a malfunction of the storage battery unit 5) is present, based on the monitoring result of the battery voltage and the cell voltages, the monitoring result of the battery temperature, and the sensing result of the charging-discharging current. For example, the processor 555 detects (determines) a presence of a malfunction of the storage battery 53 (a malfunction of the storage battery unit 5) when the storage battery unit 5 does not satisfy a charge-stop condition or a discharge-stop condition under a condition where at least one of the battery voltage, the cell voltages, the battery temperature, and the charging-discharging current is out of a normal range. When detecting a presence of a malfunction of the storage battery 53 (a malfunction of the storage battery unit 5), the processor 555 controls the notification control section 556 so that a notification means (not shown) gives a notification of the occurrence of the malfunction of the storage battery unit 5. In this case, the processor 555 also controls the communication section 554 so that the communication section 554 transmits, to the charging-discharging unit 4, malfunction information that indicates occurrence of a malfunction in the storage battery unit 5.

When the storage battery unit 5 is connected to the charging-discharging unit 4, the processor 555 judges whether or not a malfunction of the charging-discharging unit 4 is present, based on a communication result acquired from the charging-discharging unit 4 through the communication section 554. When the communication section 554 receives malfunction information that indicates occurrence of a malfunction in the charging-discharging unit 4 from the charging-discharging unit 4, the processor 555 detects a presence of a malfunction of the charging-discharging unit 4. When detecting a presence of a malfunction of the charging-discharging unit 4, the processor 555 controls the notification control section 556 so that the notification means gives a notification of the occurrence of the malfunction of the charging-discharging unit 4.

That is, occurrences of a malfunction regarding charging-discharging of the storage battery 53 in the embodiment include not only a malfunction occurring in the storage battery unit 5 (especially, in the storage battery 53) but also a malfunction occurring in the charging-discharging unit 4.

When occurrence of a malfunction regarding charging-discharging of the storage battery 53 (i.e., a malfunction occurring in the storage battery unit 5 or a malfunction occurring in the charging-discharging unit 4) is detected by the processor 555, the notification control section 556 transmits malfunction information that indicates occurrence of the malfunction to the notification means (not shown) under control of the processor 555. The notification means may be a display device, and notifies a user of the occurrence of the malfunction regarding charging-discharging of the storage battery 53 upon receiving the malfunction information from the notification control section 556. The notification means composed of the display device is configured to display information regarding the occurrence of the malfunction on a screen thereof and to thereby notify a user of the occurrence of the malfunction. The notification means may be provided integrally with the storage battery unit 5, or provided separately from the storage battery unit 5.

With this configuration, when a user checks the notification by the notification means (sees the screen of the display device), the user can know the occurrence of the malfunction regarding charging-discharging of the storage battery 53, and can do necessary working for restoring the charging-discharging unit 4 and the storage battery unit 5. The notification means may be configured to notify a user of the occurrence of the malfunction regarding charging-discharging of the storage battery 53 by alarm sound.

When a malfunction occurs during charging or discharging of the storage battery 53, the processor 555 of the controller 55 controls the switch 54 to open the switch 54. Note that the malfunction includes a malfunction occurring in the charging-discharging unit 4 and a malfunction occurring in the storage battery unit 5. For example, if the storage battery unit 5 cannot stop charging or discharging due to trouble in the charging-discharging unit 4 under a condition where the charge-stop condition or the discharge-stop condition of the storage battery unit 5 is satisfied, the processor 555 controls the switch 54 to open the switch 54.

With this configuration, it is possible to charge and discharge the storage battery 53 while the charging-discharging unit 4 and the storage battery unit 5 are in normal conditions.

The processor 555 of the embodiment is configured to control the switch 54 to open the switch 54 when the storage battery 53 starts charging or discharging without establishing a communication between the charging-discharging unit 4 and the storage battery unit 5 (for example, the communication section 554 does not receive a predetermined communication signal during a predetermined period after the controller 55 is supplied with electric power through the control power supply 56). In this case, the processor 555 controls the notification control section 556 to give a notification of occurrence of a malfunction by the notification means.

With this configuration, the storage battery 53 is charged or discharged only when the storage battery unit 5 is connected to a regular (official) charging-discharging unit 4. Thus, it is possible to reduce the possibility of over charge and over discharge of the storage battery 53, and to thereby enhance the safety.

Note that the above described configuration of "the processor 555 controlling the switch 54 to open the switch 54 when the storage battery 53 starts charging or discharging without establishing a communication between the charging-discharging unit 4 and the storage battery unit 5" is an option. Allowing the switch 54 to close without establishing the communication enables charging and discharging the storage battery 53 (while monitoring the state of the storage battery 53 by the controller 55) even if any external device is connected thereto.

The control power supply 56 is a power supply circuit configured to supply the controller 55 with the operating power for operating the controller 55. The control power supply 56 is connected to the charging-discharging line 84(843) between the charging-discharging terminal 51 and the switch 54, and is configured to receive electric power through the charging-discharging line 843 to supply the controller 55 with operating power. In the embodiment, the control power supply 56 is connected to the charging-discharging line 84 inside the storage battery unit 5. Hence, the controller 55 is always supplied with electric power when the storage battery 53 is charged or discharged. Thus, it is possible to stably charge and discharge the storage battery 53 while monitoring the storage battery 53, even if any external device is connected to the storage battery unit 5.

The control power supply 56 is integrally provided with the controller 55. Examples of a state in which the control power supply 56 is integrally provided with the controller 55 include: a state in which the control power supply 56 and the controller 55 are disposed in the same housing; and a state in which the control power supply 56 and the controller 55 are always used together even through they are disposed in different housings.

It will be described an operation regarding an electric storage apparatus (the charging-discharging unit 4 and the storage battery unit 5) in the power supply system 1 of the embodiment with reference to FIG. 1.

First, it is described a case of charging the storage battery 53. In the charging-discharging unit 4, the charging-discharging control power supply 49 receives electric power to supply the charging-discharging controller 48 with operating power. With this condition, the charging-discharging unit 4 converts the AC power from the distribution board 2 into the DC power, and supplies the storage battery unit 5 with the DC power, under control of the charging-discharging controller 48. In the storage battery unit 5, the control power supply 56 receives electric power, and supplies the controller 55 with operating power. Then, the storage battery unit 5 closes the switch 54, thereby charging the storage battery 53 while the controller 55 monitors the storage battery 53.

Next, it is described a case of discharging the storage battery 53. In the storage battery unit 5, the switch 54 is firstly closed (for example, the switch 54 is closed by operating the manual open-close mechanism), and thereby the control power supply 56 receives electric power and supplies the controller 55 with operating power. Then, the storage battery unit 5 discharges the storage battery 53 while the controller 55 monitors the storage battery 53. In the charging-discharging unit 4, the charging-discharging control power supply 49 receives electric power, and supplies the charging-discharging controller 48 with operating power. Then, the charging-discharging unit 4 converts the DC power supplied from the storage battery unit 5 into the AC power, and supplies the distribution board 2 with the AC power, under control of the charging-discharging controller 48.

When a malfunction occurs in the charging-discharging unit 4 or in the storage battery unit 5 during charging or discharging of the storage battery 53, the notification control section 556 supplies the notification means (not shown) with the malfunction information in accordance with control of the controller 55, thereby giving a notification of the occurrence of the malfunction by the notification means. In this case, the switch 54 is controlled by the controller 55 to be opened, thereby breaking an electrical connection between the charging-discharging terminal 51 and the storage battery 53.

In the power supply system 1 according to the embodiment described above, the storage battery unit 5 includes the control power supply 56 configured to supply the controller 55 with the operating power. With this configuration, it is possible to operate the controller 55 even if any external device is connected to the storage battery unit 5 because the operating power for the controller 55 is ensured inside the storage battery unit 5. Accordingly, it is possible to stably charge and discharge the storage battery 53 while the storage battery 53 is being monitored. For example, even if the storage battery unit 5 is directly connected to a DC power supply 71 and a load device 6 as exemplified in FIG. 3, the controller 55 in the storage battery unit 5 can be operated.

In the power supply system 1 of the embodiment, since the storage battery unit 5 includes the control power supply 56, the storage battery unit 5 can omit a power terminal (as the power terminal 931 in FIG. 4) for receiving the operating power for the controller 55. Hence, it is possible to reduce the number of terminals of the storage battery unit 5 ("3" in the conventional example shown in FIG. 4 and "2" in the embodiment shown in FIG. 1).

In the storage battery unit 5 of the power supply system 1 according to the embodiment, the control power supply 56 is provided so as to receive electric power from the charging-discharging line 843 between the charging-discharging terminal 51 and the switch 54. And, the switch 54 is opened when the storage battery 53 is not charged and discharged (not used) for a long time. With this configuration, it is possible to reduce the consumed power in the storage battery unit 5 because the supply of the operating power from the control power supply 56 to the controller 55 can be stopped in a case where the unit is not used for a long time. Of course, the switch 54 can be opened even the storage battery 53 is not charged or discharged for a short period. In other words, the switch 54 can be opened and closed in each use. Thus, it is possible to stop supplying the operating power from the control power supply 56 to the controller 55 even if the unit is not used for a short period, and accordingly the consumed power in the storage battery unit 5 can be reduced. The switch 54 may be configured to be opened automatically (e.g., opened by the controller 55), or may be configured to be opened manually.

In the power supply system 1 of the embodiment, when a malfunction such as over charge or over discharge occurs in the storage battery 53, the controller 55 of the storage battery unit 5 controls the notification means (not shown) to give a notification of the malfunction of the storage battery 53. With this configuration, it is possible, for example, to notify a user of an improper use or misuse (because the regular charging-discharging unit 4 rarely causes over charge and over discharge).

In the power supply system 1 of the embodiment, the switch 54 is opened by the controller 55 when a malfunction occurs during charging or discharging of the storage battery 53. With this configuration, it is possible to surely avoid over charge and over discharge during charging and discharging of the storage battery 53 when a malfunction occurs in the storage battery 53 under, for example, improper use or misuse. In addition, it is possible to surely avoid over charge and over discharge even when the charging-discharging unit 4, which is connected to the storage battery unit 5, causes a failure.

In the storage battery unit 5 of the embodiment, the controller 55 can operate by the operating power from the control power supply 56, even when the storage battery unit 5 is connected to an external device other than a predetermined charging-discharging unit (i.e., the charging-discharging unit 4 of the embodiment). Thus, it is possible to protect the storage battery unit 5 (especially, the storage battery 53) because the controller 55 can control the switch 54 to open when the storage battery 53 starts charging or discharging without establishing a communication between the external device and the storage battery unit 5.

Describing the embodiment in other words, the storage battery unit 5 of the embodiment integrally includes the charging-discharging terminal 51, the communication terminal 52, the storage battery 53, the switch 54, the controller 55, the control power supply 56, and the notification control section 556. The storage battery unit 5 of the embodiment is configured to be charged and discharged under control of the charging-discharging unit 4.

The charging-discharging terminal 51 of the storage battery unit 5 is to be connected to the charging-discharging terminal 42 of the charging-discharging unit 4. The communication terminal 52 of the storage battery unit 5 is to be connected to the communication terminal 43 of the charging-discharging unit 4.

The switch 54 is disposed along the charging-discharging line 84 between the charging-discharging terminal 51 and the storage battery 53.

The control power supply 56 is configured to supply the controller 55 with the operating power for operating the controller 55. The control power supply 56 is connected to the charging-discharging line 843 between the charging-discharging terminal 51 and the switch 54, and is configured to receive electric power from the charging-discharging line 843 to supply the controller 55 with operating power.

The controller 55 is configured to judge whether or not a malfunction of the storage battery 53 is present, and to control, when a malfunction occurs in the storage battery 53, the notification means so that the notification means gives a notification of the malfunction of the storage battery 53.

With this configuration, the controller 55 can receive electric power from the charging-discharging line 843 through the control power supply 56 even if any external device is connected to the storage battery unit 5. Because the controller 55 can be operated by the operating power for the controller 55 ensured inside the storage battery unit 5, it is possible to stably charge and discharge the storage battery 53 while monitoring the storage battery 53. The storage battery unit 5 can notify, when a malfunction occurs in the storage battery 53, a user of the malfunction by the notification means.

The controller 55 has the monitoring function configured to monitor the storage battery 53. The controller 55 has at least one status detection section configured to detect occurrence of a malfunction regarding charging and discharging of the storage battery 53 (i.e., a malfunction of the storage battery unit 5 or a malfunction of the charging-discharging unit 4).

The controller 55 which is supplied electric power from the control power supply 56 is configured to open the switch 54 when determining occurrence of a malfunction based on a detection result in the states detection section.

The controller 55 which is supplied electric power from the control power supply 56 is configured to give, when determining occurrence of a malfunction based on a detection result in the states detection section, a notification of occurrence of the malfunction through the notification control section 556.

The states detection section of the embodiment includes, as a first states detection section, the temperature monitoring section 552 configured to sense the battery temperature of the storage battery 53. When the battery temperature sensed by the temperature monitoring section 552 is higher than a predetermined upper threshold temperature or lower than a predetermined lower threshold temperature, the controller 55 determines occurrence of a malfunction. In view of avoiding interference between operations in the charging-discharging unit 4 and in the storage battery unit 5, it is preferable that: "the upper threshold temperature" is equal to or more than "the operating upper limit temperature" used in the charging-discharging unit 4; and "the lower threshold temperature" is equal to or less than "the operating lower limit temperature" used in the charging-discharging unit **4.**

The states detection section of the embodiment includes, as a second states detection section, the voltage monitoring section **551** configured to sense the battery voltage of the storage battery **53.** When the battery voltage sensed by the voltage monitoring section **551** is higher than a predetermined upper limit voltage or lower than a predetermined lower limit voltage, the controller **55** determines occurrence of a malfunction. In view of avoiding interference between operations in the charging-discharging unit **4** and in the storage battery unit **5,** it is preferable that: "the upper limit voltage" is equal to or more than "the charge-stop voltage" used in the charging-discharging unit **4;** and "the lower limit voltage" is equal to or less than "the discharge-stop voltage" used in the charging-discharging unit **4.**

The states detection section of the embodiment includes, as a third states detection section, the current sensing section **553** configured to sense the charging-discharging current of the storage battery unit **5.** When the charging-discharging current sensed by the current sensing section **553** is larger than a predetermined reference value, the controller **55** determines occurrence of a malfunction.

The states detection section of the embodiment includes, as a fourth states detection section, the communication section **554** configured to communicate with an external charging-discharging unit **4.** When receiving malfunction information that indicates occurrence of a malfunction in the charging-discharging unit **4** from the charging-discharging unit **4** through the communication section **554,** the controller **55** determines occurrence of a malfunction. The controller 55 of the embodiment also determines occurrence of a malfunction when the storage battery **53** starts charging or discharging without establishing a communication with the charging-discharging unit **4.**

In a modified example of the embodiment, the power supply system **1** has a configuration of including, instead of including both of the electric storage apparatus (the charging-discharging unit **4** and the storage battery unit 5) and the solar power generation apparatus (the solar panel 31 and the power conditioner 32), only the electric storage apparatus. In the power supply system 1 according to this modified example, the storage battery 53 can be charged in night time with a low cost and can be discharged in day time.

Although the storage battery unit 5 is used together with the charging-discharging unit 4 in the embodiment, the storage battery unit 5 can be detached from the charging-discharging unit 4 and be directly connected to a power supply (such as the commercial power supply 7) or the distribution board 2. Even in this case, because the storage battery unit 5 includes the control power supply 56, the storage battery 53 can be stably charged and discharged while the storage battery 53 is being monitored.

The storage battery unit 5 may be configured to wirelessly communicate with an external device such as the charging-discharging unit 4, instead of through a wire.

## Claims

1. A storage battery unit (5) integrally comprising:
a storage battery (53);
a controller (55) that has a monitoring function configured to monitor the storage battery (53);
a control power supply (56) configured to supply the controller (55) with operating power for operating the controller (55);
a charging-discharging terminal (51) for charging and discharging of the storage battery (53); and
a switch (54) disposed along a charging-discharging line (84) between the charging-discharging terminal (51) and the storage battery (53),
wherein the controller (55) is configured, as the monitoring function, to judge whether or not a malfunction of the storage battery (53) is present, and also to control, when a malfunction occurs in the storage battery (53), a notification means so that the notification means gives a notification of the malfunction of the storage battery (53), **characterized in that**
wherein the control power supply (56) is connected to the charging-discharging line (843) between the charging-discharging terminal (51) and the switch (54), and is configured to receive electric power through the charging-discharging line (843) to supply the controller (55) with the operating power, and
the switch (54) is configured to be opened when the storage battery (53) is not used.

2. The storage battery unit (5) according to claim 1, wherein the controller (55) is configured to control the switch (54) so that the switch (54) is opened when a malfunction occurs during charging or discharging of the storage battery (53).

3. A power supply system (1) comprising:
the storage battery unit (5) according to any one of claims 1 to 2;
a distribution board (2);
a load device (6) connected to the distribution board (2);
a solar power generation apparatus (31, 32) configured to supply generated electric power to the distribution board (2);
a charging-discharging unit (4) that is connected to a branch breaker of the distribution board (2), configured to convert AC power supplied through the distribution board (2) into DC power to charge the storage battery (52) of the storage battery unit (5) by the DC power, and configured to convert DC power stored in the storage battery unit (5) into AC power, and to supply the AC power to the load device (6) through the distribution board (2),
wherein the charging-discharging unit (4) comprises:
a charging-discharging unit side charging-discharging terminal (42) connected to the charging-discharging terminal (51) of the storage battery unit (5);
a charging-discharging controller (48) configured to control charging and discharging of the storage battery (53); and
a charging-discharging control power supply (49) configured to receive electric power through the charging-discharging line (841, 842), and to supply the charging-discharging controller (48) with an operating power for operating the charging-discharging controller (48).

## Patentansprüche

1. Akkumulatoreinheit (5), die integral umfasst:
einen Akkumulator (53);
eine Steuereinheit (55) mit einer Überwachungsfunktion, die zum Überwachen des Akkumulators (53) konfiguriert ist;
eine Steuerstromversorgung (56), die zum Versorgen der Steuereinheit (55) mit Betriebsstrom zum Betreiben der Steuereinheit (55) konfiguriert ist;
eine Lade-Entlade-Klemme (51) zum Laden und Entladen des Akkumulators (53) und
einen Schalter (54), der entlang einer Lade-Entlade-Leitung (84) zwischen der Lade-Entlade-Klemme (51) und dem Akkumulator (53) angeordnet ist,
wobei die Steuereinheit (55) als Überwachungsfunktion zum Beurteilen konfiguriert ist, ob eine Fehlfunktion des Akkumulators (53) vorliegt oder nicht, sowie zum Steuern eines Mitteilungsmittels im Falle einer Fehlfunktion des Akkumulators (53), sodass das Mitteilungsmittel eine Mitteilung der Fehlfunktion des Akkumulators (53) abgibt, **dadurch gekennzeichnet, dass**
die Steuerstromversorgung (56) zwischen der Lade-Entlade-Klemme (51) und dem Schalter (54) mit der Lade-Entlade-Leitung (843) verbunden und zum Empfangen von elektrischem Strom über die Lade-Entlade-Leitung (843) zur Versorgung der Steuereinheit (55) mit Betriebsstrom konfiguriert ist und
der Schalter (54) so konfiguriert ist, dass er geöffnet ist, wenn der Akkumulator (53) nicht verwendet wird.

2. Akkumulatoreinheit (5) nach Anspruch 1, wobei die Steuereinheit (55) zum Steuern des Schalters (54) konfiguriert ist, sodass der Schalter (54) geöffnet ist, wenn beim Laden oder Entladen des Akkumulators (53) eine Fehlfunktion auftritt.

3. Stromversorgungssystem (1), umfassend:
die Akkumulatoreinheit (5) nach einem der Ansprüche 1 bis 2;
einen Verteiler (2);
eine Lastvorrichtung (6), die mit dem Verteiler (2) verbunden ist;
eine Solarstromerzeugungsvorrichtung (31, 32), die zum Versorgen des Verteilers (2) mit erzeugtem elektrischem Strom konfiguriert ist;
eine Lade-Entlade-Einheit (4), die mit einem Zweigunterbrecher des Verteilers (2) verbunden ist und die zum Umwandeln von über den Verteiler (2) bereitgestelltem Wechselstrom in Gleichstrom zum Laden des Akkumulators (52) der Akkumulatoreinheit (5) mit dem Gleichstrom konfiguriert ist und zum Umwandeln von in dem Akkumulator der Akkumulatoreinheit (5) gespeichertem Gleichstrom in Wechselstrom und zum Versorgen der Lastvorrichtung (6) mit dem Wechselstrom durch den Verteiler (2) konfiguriert ist,
wobei die Lade-Entlade-Einheit (4) umfasst:
eine Lade-Entlade-Klemme (42) auf der Lade-Entlade-Seite der Einheit, die mit der Lade-Entlade-Klemme (51) der Akkumulatoreinheit (5) verbunden ist;
eine Lade-Entlade-Steuereinheit (48), die zum Steuern des Ladens und Entladens des Akkumulators (53) konfiguriert ist, und
eine Lade-Entlade-Steuerstromversorgung (49), die zum Empfangen von elektrischem Strom durch die Lade-Entlade-Leitung (841, 842) und zum Versorgen der Lade-Entlade-Steuereinheit (48) mit einem Betriebsstrom zum Betreiben der Lade-Entlade-Steuereinheit (48) konfiguriert ist.

## Revendications

1. Unité d'accumulateur (5) qui comprend intégralement :
un accumulateur (53) ;
un contrôleur (55) qui possède une fonction de surveillance configurée pour surveiller l'accumulateur (53) ;
une alimentation de commande (56) configurée pour fournir au contrôleur (55) une énergie destinée à le faire fonctionner ;
un terminal de chargement-déchargement (51) destiné à charger et décharger l'accumulateur (53) ; et
un commutateur (54) disposé le long d'une ligne de chargement-déchargement (84) entre le terminal de chargement-déchargement (51) et l'accumulateur (53),
dans laquelle le contrôleur (55) est configuré, en guise de fonction de surveillance, pour juger si un dysfonctionnement de l'accumulateur (53) est présent ou non, et également pour contrôler, lorsqu'un dysfonctionnement se produit dans l'accumulateur (53), un moyen de notification de sorte que le moyen de notification indique le dysfonctionnement de l'accumulateur (53),
**caractérisée en ce que**
l'alimentation de contrôle (56) est reliée à la ligne de chargement-déchargement (843) entre le terminal de chargement-déchargement (51) et le commutateur (54), et est configurée pour recevoir de l'électricité par le biais de la ligne de chargement-déchargement (843) afin d'alimenter le contrôleur (55) en énergie, et
le commutateur (54) est configuré pour être ouvert lorsque l'accumulateur (53) n'est pas utilisé.

2. Unité d'accumulateur (5) selon la revendication 1, dans laquelle le contrôleur (55) est configuré pour contrôler le commutateur (54) de sorte que le commutateur (54) soit ouvert lorsqu'un dysfonctionnement se produit pendant le chargement ou le déchargement de l'accumulateur (53).

3. Système d'alimentation (1) qui comprend :
l'unité d'accumulateur (5) selon l'une quelconque des revendications 1 à 2 ;
une carte de distribution (2) ;
un dispositif de charge (6) relié à la carte de distribution (2) ;
un appareil de génération d'énergie solaire (31, 32) configuré pour fournir une énergie électrique générée à la carte de distribution (2) ;
une unité de chargement-déchargement (4) qui est reliée à un disjoncteur secondaire de la carte de distribution (2), configurée pour convertir l'énergie CA fournie par le biais de la carte de distribution (2) en énergie CC afin de charger l'accumulateur (52) de l'unité d'accumulateur (5) avec l'énergie CC, et configurée pour convertir l'énergie CC stockée dans l'unité d'accumulateur (5) en énergie CA, et pour fournir l'énergie CA au dispositif de charge (6) par le biais de la carte de distribution (2),
dans lequel l'unité de chargement-déchargement (4) comprend :
un terminal de chargement-déchargement côté unité de chargement-déchargement (42), relié au terminal de chargement-déchargement (51) de l'unité d'accumulateur (5) ;
un contrôleur de chargement-déchargement (48) configuré pour contrôler le chargement et le déchargement de l'accumulateur (53) ; et
une alimentation de commande de chargement-déchargement (49) configurée pour recevoir de l'électricité par le biais de la ligne de chargement-déchargement (841, 842), et pour alimenter le contrôleur de chargement-déchargement (48) avec une énergie destinée à le faire fonctionner.
